# EUROPÄISCHE PATENTSCHRIFT

(11) **EP 3 142 989 B1**
(45) Veröffentlichungstag und Bekanntmachung des Hinweises auf die Patenterteilung: **27.12.2023**
(21) Anmeldenummer: 15720350.6
(22) Anmeldetag: 12.05.2015
(51) Int. Cl.: C04B 40/00, C04B 28/02, C04B 103/12, C04B 103/14

(54) **STABILISIERTER ERSTARRUNGS- UND ERHÄRTUNGSBESCHLEUNIGER FÜR HYDRAULISCHE BINDEMITTEL**
STABILISED SETTING AND HARDENING ACCELERATOR FOR HYDRAULIC BINDING AGENTS
ACCÉLÉRATEUR DE PRISE ET DE DURCISSEMENT STABILISÉ POUR LIANT HYDRAULIQUE

(30) Priorität: 14.05.2014 EP 14168358
(43) Veröffentlichungstag der Anmeldung: 22.03.2017
(73) Patentinhaber: Sika Technology AG, 6340 Baar (CH)
(72) Erfinder: STENGER, Christian, CH-3076 Worb (CH)
(74) Vertreter: Sika Patent Attorneys
(86) Internationale Anmeldenummer: PCT/EP2015/060419
(87) Internationale Veröffentlichungsnummer: WO 2015/173213

(56) Entgegenhaltungen:
- EP-A1- 2 261 188
- EP-B1- 0 946 451
- WO-A1-2006/010407
- WO-A1-2006/074739
- WO-A2-01/42165
- DE-B3-102004 016 127

## Beschreibung

### Technisches Gebiet

Die Erfindung betrifft einen Erstarrungs- und Erhärtungsbeschleuniger für hydraulische Bindemittel, ein Verfahren zur Beschleunigung des Erstarrens und Erhärtens von hydraulischen Bindemitteln und die Verwendung des Erstarrungs- und Erhärtungsbeschleunigers in hydraulischen Bindemitteln insbesondere in Spritzbeton oder Spritzmörtel. Weiter bezieht sich die Erfindung auf einen Bindemittel enthaltendes Gemisch enthaltend den Erstarrungs- und Erhärtungsbeschleunigers sowie einen daraus hergestellten ausgehärteten Formkörper.

### Stand der Technik

Es sind viele Substanzen bekannt, welche das Erstarren und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus der EP 0 076 927 B1 sind alkalifreie Erstarrungsbeschleuniger für hydraulische Bindemittel bekannt, welche diese Nachteile vermeiden sollen. Zur Beschleunigung des Erstarrens und Erhärtens eines hydraulischen Bindemittels, wie Zement, Kalk, hydraulischer Kalk und Gips sowie daraus hergestelltem Mörtel und Beton, werden dem Gemisch, welches das genannte Bindemittel enthält, von 0.5 bis 10 Gew.%, bezogen auf das Gewicht dieses Bindemittels, eines alkalifreien Erstarrungs- und Erhärtungsbeschleunigers zugegeben, wobei dieser Beschleuniger Aluminiumhydroxid enthält. Solche Mörtel und Betone sind durch das beschleunigte Erstarren und Erhärten besonders gut geeignet als Spritzmörtel und -beton.

Aus der EP 0 946 451 B1 sind Erstarrungs- und Erhärtungsbeschleuniger in gelöster Form für hydraulische Bindemittel bekannt, welche beim Spritzen des Betons leichter dem Beton zugemischt werden können. Ein solcher Erstarrungs- und Erhärtungsbeschleuniger besteht unter anderem aus Aluminiumhydroxid, Aluminiumsalzen und organischen Carbonsäuren.

Aus WO 01/42165 ist ein Zusatzmittel zum Beschleunigen von Spritzbeton bekannt, wobei das Zusatzmittel Aluminiumsulfat, Aluminiumhydroxid und optional einen Stabilisator ausgewählt aus Hydroxycarbonsäuren, Phosphorsäuren und nicht-alkalischen Phosphorsäuresalzen enthält.

Aus WO 06/010407 sind wässrige Spritzbetonbeschleuniger bekannt, welche eine gelöste Carbonsäure in einer Menge von weniger als 1 Gew.-% und Aluminiumsulfat enthalten.

Solche bekannten Beschleuniger enthalten üblicherweise eine relativ hohe Menge an organischen Carbonsäuren, was insbesondere die Herstellung verteuert. Weitere Nachteile solcher Erstarrungs- und Erhärtungsbeschleuniger liegen zudem in einer relativ geringen Frühfestigkeit in den ersten Stunden und der oft ungenügenden Lagerstabilität.

### Darstellung der Erfindung

Der Erfindung liegt die Aufgabe zugrunde, bei einem Erstarrungs- und Erhärtungsbeschleuniger für hydraulische Bindemittel der eingangs genannten Art einen möglichst günstigen Beschleuniger mit möglichst hoher Festigkeit in den ersten Minuten und Stunden bei möglichst langer Stabilitätsdauer des Beschleunigers zu erzielen.

Erfindungsgemäss wird dies durch die Merkmale des ersten Anspruches erreicht.

Die Vorteile der Erfindung sind unter anderem darin zu sehen, dass durch die erfindungsgemässen Beschleuniger eine hohe Stabilität, d.h. Lagerstabilität der Beschleuniger-Lösung erzielt wird und dass hohe Festigkeiten in den ersten Minuten und Stunden erzielt werden. Zudem ist der erfindungsgemässe Beschleuniger günstiger als herkömmliche Beschleuniger, weil nur ein geringer Anteil an Säuren benötigt wird.

Weitere vorteilhafte Ausgestaltungen der Erfindung ergeben sich aus der Beschreibung und den Unteransprüchen.

### Weg zur Ausführung der Erfindung

Erfindungsgemässe Erstarrungs- und Erhärtungsbeschleuniger für hydraulische Bindemittel, insbesondere für Spritzbeton oder Spritzmörtel, umfassen Sulfat, Aluminium und wenigstens zwei chemisch unterschiedliche organische Säuren, welche jeweils zusätzlich zu mindestens einer Säuregruppe wenigstens eine Hydroxygruppe aufweisen und wobei ein Anteil der wenigstens zwei organischen Säuren zusammen höchstens 1 Gew.-%, bezogen auf das Gesamtgewicht des Beschleunigers, ausmacht.

Der Beschleuniger ist insbesondere ein wasserbasierter Beschleuniger. Vorzugsweise liegt der Beschleuniger in Form einer wässrigen Suspension oder einer wässrigen Lösung vor.

Der erfindungsgemässe Beschleuniger ist bevorzugt alkali- und/oder chloridfrei. Unter einem alkali- und/oder chloridfreien Beschleuniger wird in der Bauchemie üblicherweise ein Beschleuniger verstanden, welcher weniger als 1 Gew.-% Alkali-, bzw. Alkalimetall- oder Chloridionen aufweist, bezogen auf das Gesamtgewicht des Beschleunigers.

Prinzipiell können zusätzlich zu den wenigstens zwei chemisch unterschiedlichen organischen Säuren, welche jeweils zusätzlich zu mindestens einer Säuregruppe wenigstens eine Hydroxygruppe aufweisen, auch eine oder mehrere andere Säuren vorliegen. Der Gewichtsanteil dieser anderen Säuren ist prinzipiell nicht limitiert.

Ein Anteil der anderen Säure(n) ist mit Vorteil aber geringer als 10 Gew.-%, insbesondere geringer als 6 Gew.-%, insbesondere geringer als 4 Gew.-%. Weiter bevorzugt ist der Anteil der anderen Säuren(n) bevorzugt geringer als 0.2 Gew.-%, ganz besonders bevorzugt geringer als 0.1 Gew.-% oder 0.01 Gew.-%, bezogen auf das Gesamtgewicht des Beschleunigers.

Ein besonders bevorzugter erfindungsgemässer Beschleuniger ist frei von anderen Säuren, welche nicht zusätzlich zu mindestens einer Säuregruppe wenigstens eine Hydroxygruppe aufweisen.

Ein Anteil an Alkansäuren, insbesondere Ameisensäure, ist mit Vorteil geringer 6 Gew.-%, insbesondere geringer als 4 Gew.-%.

Weiter bevorzugt ist ein Anteil an Alkansäuren, insbesondere Ameisensäure geringer als 0.4 Gew.-%, bevorzugt geringer als 0.2 Gew.-%, ganz besonders bevorzugt geringer als 0.1 Gew.-% oder 0.01 Gew.-%, bezogen auf das Gesamtgewicht des Beschleunigers.

Falls vorhanden, beträgt ein Anteil an Alkansäuren, insbesondere Ameisensäure, insbesondere 0.01 - 4 Gew.-%, bevorzugt 0.05 - 2 Gew.-%, im Besonderen 0.1 - 1 Gew.-% oder 0.1 - 0.5 Gew.-%, bezogen auf das Gesamtgewicht des Beschleunigers

Ein besonders bevorzugter erfindungsgemässer Beschleuniger ist frei von Alkansäuren, insbesondere Ameisensäure.

Insbesondere ist der Beschleuniger frei von Phosphorsäure, Salzsäure, Salpetersäure, und/oder Salze der genannten Säuren. Damit ist insbesondere gemeint, dass ein Anteil dieser Säuren und/oder Salze, kleiner als 0.1 Gew.-%, insbesondere kleiner als 0.01 Gew.-%, bezogen auf das Gesamtgewicht des Beschleunigers, ist.

Der Begriff "organische Säure" im Rahmen dieser Anmeldung ist breit auszulegen und umfasst im Wesentlichen alle organischen Verbindungen, welche über wenigstens eine azide funktionelle Gruppe oder eine Säuregruppe verfügen und bei Zugabe zu reinem Wasser dessen pH-Wert zu vermindern vermögen.

Säuregruppen umfassen vorliegend nebst Carboxygruppen insbesondere auch saure Hydroxygruppen und Enole.

Insbesondere weisen organische Säuren oder Säuregruppen vorliegend jeweils einen pKₐ-Wert ≤ 6, bevorzugt im Bereich von 2 - 5, speziell bevorzugt 3.0 - 4.5, auf. Falls eine organische Säure mehrere Säuregruppen aufweist, ist diejenige Säuregruppe mit dem geringsten pKₐ-Wert massgebend. Der pKₐ-Wert steht dabei für den negativen dekadischen Logarithmus der Säurekonstanten Kₐ und wird bei einer Temperatur von 25°C unter Standardbedingungen in Wasser bestimmt.

Der Ausdruck "chemisch unterscheidbar" steht vorliegend insbesondere für Verbindungen, welche unterschiedliche Summenformeln aufweisen. Säuregruppen werden dabei stets im neutralen Zustand (protonierte Gruppe) betrachtet.

Ein Anteil der wenigstens zwei organischen Säuren zusammen beträgt insbesondere 0.001 bis 1 Gew.-%, bevorzugt 0.1 - 0.9 Gew.-% oder 0.4 - 0.8 Gew.-%, bezogen auf das Gesamtgewicht des Beschleunigers.

Insbesondere ist wenigstens eine der beiden organischen Säuren eine organische Säure, welche als Säuregruppe mindestens eine, insbesondere zwei, bevorzugt drei Carboxygruppe(n) aufweist.

Ganz besonders bevorzugt ist wenigstens eine der beiden organischen Säuren eine α- Hydroxycarbonsäure, bevorzugt Zitronensäure.

Eine α- Hydroxycarbonsäure, bevorzugt Zitronensäure, verfügt mit Vorteil über einen Gewichtsanteil von 0.05 - 0.8 Gew.-%, insbesondere 0.3 - 0.7 Gew.-%, bezogen auf das Gesamtgewicht des Beschleunigers.

Gemäss einer weiteren vorteilhaften Ausführungsform weist wenigstens eine der beiden organischen Säuren als Säuregruppe eine Enol-Gruppe, insbesondere eine Endiol-Gruppe (Verbindungen, die an den beiden Kohlenstoffatomen einer C=C-Doppelbindung je eine Hydroxygruppe tragen), auf. Weiter bevorzugt beinhaltet wenigstens eine der beiden organischen Säuren eine Redukton-Gruppe (Verbindungen, die direkt am benachbarten Kohlenstoffatom einer Endiol-Gruppe zusätzlich eine Carbonylgruppe aufweisen).

Besonders bevorzugt ist wenigstens eine der beiden organischen Säuren Ascorbinsäure.

Eine organische Säure mit einer Enol-Gruppe, einer Endiol-Gruppe oder einer Redukton-Gruppe, insbesondere Ascorbinsäure, weist bevorzugt einen Gewichtsanteil von 0.05 - 0.8 Gew.-%, insbesondere 0.1 - 0.3 Gew.-%, bezogen auf das Gesamtgewicht des Beschleunigers, auf.

Besonders vorteilhaft ist es, wenn eine erste der beiden organischen Säuren eine Hydroxycarbonsäure ist und eine zweite der beiden organischen Säuren als Säuregruppe eine Enol-Gruppe, eine Endiol-Gruppe oder eine Redukton-Gruppe beinhaltet.

Bevorzugt liegt ein Gewichtsverhältnis der wenigstens zwei organischen Säuren im Bereich von 5:1 - 1:5, insbesondere 3:1 - 1:1.

Insbesondere ist eine erste der beiden organischen Säuren Zitronensäure und eine zweite der beiden organischen Säuren Ascorbinsäure. Bevorzugt werden diese beiden organischen Säuren mit den vorstehend genannten Gewichtsanteilen eingesetzt.

Gemäss einer weiteren vorteilhaften Ausführungsform beträgt ein Molverhältnis von Aluminium zu Sulfat im Beschleuniger 0.7 -1.5, insbesondere 0.8 - 1.0.

Insbesondere enthält der Beschleuniger, jeweils bezogen auf das Gesamtgewicht des Beschleunigers, 10 bis 35 Gew.-%, insbesondere 15 bis 29 Gew.-%, bevorzugt 15 - 27 Gew.-%, vorzugsweise 24.5 bis 27 Gew.-%, Sulfat.

Ein Anteil an Aluminium, jeweils bezogen auf das Gesamtgewicht des Beschleunigers, beträgt insbesondere 3.2 bis 9.5 Gew.-%, mit Vorteil 3.2 - 9.0 Gew.-%, bevorzugt 4 bis 6.5 Gew.-%.

Bevorzugt enthält der Beschleuniger, jeweils bezogen auf das Gesamtgewicht des Beschleunigers, 0.001 bis 1 Gew.-%, insbesondere 0.01 bis 1 Gew.-%, speziell 0.1 - 0.95 Gew.-%, im Besonderen 0.6 - 0.95 oder 0.6 - 0.9 Gew.-%, der wenigstens zwei organischen Säuren.

Ein besonders vorteilhafter Beschleuniger enthält 10 bis 35 Gew.-% Sulfat, 3.2 bis 9.5 Gew.-% Aluminium und 0.001 bis 1 Gew.-% der wenigstens zwei organischen Säuren, jeweils bezogen auf das Gesamtgewicht des Beschleunigers.

Ein weiterer vorteilhafter Beschleuniger enthält 10 bis 27 Gew.-% Sulfat, 3.2 bis 9.0 Gew.-% Aluminium und 0.001 bis 1 Gew.-% der wenigstens zwei organischen Säuren, jeweils bezogen auf das Gesamtgewicht des Beschleunigers.

Noch mehr bevorzug ist ein Beschleuniger umfassend 15 bis 29 Gew.-%, bevorzugt 15 - 27 Gew.-%, vorzugsweise 24.5 bis 27 Gew.-%, Sulfat, 4 bis 6.5 Gew.-% Aluminium und 0.01 bis 1 Gew.-% der wenigstens zwei organischen Säuren, jeweils bezogen auf das Gesamtgewicht des Beschleunigers.

Ein erfindungsgemässer Beschleuniger enthält mit Vorteil Aluminiumsulfat, Aluminiumhydroxysulfat, Schwefelsäure, Aluminiumhydroxid, und/oder Aluminiumhydroxidcarbonat.

Das Sulfat des Beschleunigers stammt aus Aluminiumsulfat, Aluminiumhydroxysulfat und/oder Schwefelsäure. Mit anderen Worten enthält der Beschleuniger wenigstens eine der genannten Substanzen als Quelle für Sulfat.

Das Aluminium des Beschleunigers stammt aus Aluminiumsulfat, Aluminiumhydroxysulfat, Aluminiumhydroxid, und/oder Aluminiumhydroxidcarbonat. Anders ausgedrückt enthält der Beschleuniger wenigstens eine der genannten Substanzen als Quelle für Aluminium.

Ein erfindungsgemässer Beschleuniger enthält insbesondere Aluminiumsulfat und/oder Schwefelsäure, sowie Aluminiumhydroxid und wenigstens zwei organischen Säuren. Als Aluminiumhydroxid wird insbesondere amorphes Aluminiumhydroxid verwendet.

Das zur Herstellung verwendbare Aluminiumsulfat kann eine unterschiedliche Menge an Kristallwasser enthalten. Das typischerweise verwendete Aluminiumsulfat ist das Aluminiumsulfat-Tetradecahydrat (Al₂(SO₄)₃ · 14 H₂O). Es wird üblicherweise auch als 17% Aluminiumsulfat bezeichnet, weil es 17% Al₂O₃ enthält. Die in dieser vorliegenden Schrift erwähnten Mengenangaben betreffend Aluminiumsulfat beziehen sich auf das Al₂(SO₄)₃ · 14 H₂O. Falls das Aluminiumsulfat andere Mengen an Kristallwasser enthält, sind die für die vorliegende Erfindung benötigten Mengen an Aluminiumsulfat einfach zu berechnen. So würde 40 bis 60 Gew.-% Al₂(SO₄)₃ · 14 H₂O einer Menge eines kristallwasserfreien Al₂(SO₄)₃ von 23 bis 35 Gew.-% entsprechen.

Das Aluminiumsulfat kann auch durch eine Reaktion von Aluminiumhydroxid mit Schwefelsäure bei der Herstellung des Beschleunigers erzeugt werden, wobei sich entsprechend Sulfationen in der wässrigen Lösung bilden. Allgemein kann Aluminiumsulfat durch eine Reaktion einer basischen Aluminiumverbindung mit Schwefelsäure erzeugt werden.

Das Aluminiumhydroxid kann in amorpher oder kristalliner Form eingesetzt werden. Vorteilhafterweise wird amorphes Aluminiumhydroxid verwendet. Das Alumiumhydroxid kann auch in Form von Aluminiumhydroxidcarbonat, Aluminiumhydroxysulfat oder ähnlichem verwendet werden.

Bevorzugt enthält der Beschleuniger 30 bis 70 Gew.-% Aluminiumsulfat (Al₂(SO₄)₃ · 14 H₂O), 0.1 bis 20 Gew.-% Aluminiumhydroxid und/oder 0.001 bis 1 Gew.-% der wenigstens zwei organischen Säuren, bezogen auf das Gesamtgewicht des Beschleunigers.

Noch weiter bevorzugt enthält der Beschleuniger 35 bis 65 Gew.-%, insbesondere 35 bis 45 Gew.-% speziell 35 - 40 Gew.-%, Aluminiumsulfat (Al₂(SO₄)₃*14H₂O), 9 bis 18 Gew.-%, speziell 13 - 18 Gew.-%, Aluminiumhydroxid und/oder 0.01 bis 1 Gew.-% der wenigstens zwei organischen Säuren, jeweils bezogen auf das Gesamtgewicht des Beschleunigers.

Um Beschleuniger mit noch besserer Lagerstabilität zu erhalten, kann der Beschleuniger zusätzlich Magnesiumhydroxid (Mg(OH)₂), Magnesiumoxid (MgO), Magnesiumoxyhydroxid, Magnesiumcarbonat und/oder die entsprechende Menge einer anderen Magnesiumverbindung, vorzugsweise in einer Menge von 0.1 bis 10 Gew.-%, insbesondere 0.2 bis 5 Gew.-% oder 0.5 bis 4 Gew.-%, bezogen auf das Gesamtgewicht des Beschleunigers, enthalten.

Weiter kann es vorteilhaft sein, wenn der Beschleuniger zudem 0.1 - 10 Gew.-% Alkanolamin, bezogen auf das Gesamtgewicht des Beschleunigers, enthält. Als Alkanolamin wird vorteilhafterweise Monoethanolamin, Diethanolamin, Triethanolamin und/oder Methyl-diisopropanolamin verwendet.

Zusätzlich kann zur Herstellung des erfindungsgemässen Beschleunigers mindestens ein weiteres zwei- oder höherwertiges Metallsulfat verwendet werden, vorzugsweise in einer Menge von 0.1 - 5 Gew.-%, bezogen auf das Gesamtgewicht des Beschleunigers. Besonders bevorzugt als weiteres Metallsulfat ist das Mangan(II)sulfat. Ebenfalls geeignet ist das Eisensulfat.

Ebenfalls stabile Beschleuniger und gute Resultate werden mit einem erfindungsgemässen Beschleuniger erhalten, welcher zusätzlich Kieselsäure umfasst.

Unter dem Begriff "Kieselsäure" wird in der ganzen vorliegenden Schrift eine Kieselsäure verstanden, zu der neben der ortho-Kieselsäure alle Formen des Siliciumdioxids, also das Anhydrid der ortho-Kieselsäure, das eigentliche Siliciumdioxid, wie auch kolloidale, gefällte oder pyrogene Kieselsäure oder Silicafume, gezählt werden. Die im erfindungsgemässen Beschleuniger verwendete Kieselsäure ist oder enthält daher vorzugsweise kolloidale, gefällte, pyrogene Kieselsäure oder Mikrokieselsäure (Silicafume) oder ein Gemisch davon.

Der Gehalt an Siliciumdioxid, beziehungsweise der Feststoffgehalt der Kieselsäure, bezogen auf das Gesamtgewicht des Beschleunigers, beträgt vorzugsweise 0.1 bis 40 Gew.-%, bevorzugt 1 bis 30 Gew.-%, noch mehr bevorzugt 3 bis 20 Gew.-%, insbesondere 6 bis 15 Gew.-%.

Der erfindungsgemässe Beschleuniger kann zusätzlich Fliessmittel, insbesondere Polycarboxylate, oder Stabilisatoren, z.B. Bentonite, Actigel 208, Kaolin oder Magnesiumsilikate, z.B. Sepiolith, enthalten.

Selbstverständlich kann der erfindungsgemässe Beschleuniger weitere geeignete, dem Fachmann bekannte, Zusatzmittel umfassen. Vorzugsweise enthält er aber keine weiteren Verdickungsmittel oder Thixotropiermittel.

Ein Anteil an Wasser im Beschleuniger beträgt insbesondere 20 - 60 Gew.-%, insbesondere 35 - 55 Gew.-%, bevorzugt 40 - 50 Gew.-%, bezogen auf das Gesamtgewicht des Beschleunigers. Allfälliges Kristallwasser von der Beschleunigerkomponenten, z.B. Kristallwasser aus Aluminiumsulfat, wird hier mitgerechnet.

Weiterhin kann der erfindungsgemässe Beschleuniger zusätzlich Glycerin umfassen, vorzugsweise in einer Menge von 0.1 bis 8 Gew.-%, insbesondere 2 bis 4 Gew.-%, bezogen auf das Gesamtgewicht des Beschleunigers.

Die vorgenannten Stoffe sind dabei insbesondere zumindest teilweise als Ionen in Lösung anzutreffen. Sie könne aber beispielsweise auch in komplexierter Form oder ungelöst im Beschleuniger auftreten. Dies ist insbesondere der Fall, wenn der Beschleuniger als Lösung mit teilweise fein dispergierten Partikeln oder als Suspension vorliegt.

Ein besonders vorteilhafter erfindungsgemässer Erstarrungs- und Erhärtungsbeschleuniger umfasst beispielsweise folgende Komponenten oder er besteht daraus:
(a) 15 bis 35 Gew.-% Sulfat;
(b) 3.2 bis 9.5 % Gew.-% Aluminium (bzw. 6 bis 18 % Al₂O₃);
(c) 0.001 bis 1 Gew.-% von zwei chemisch unterschiedlichen organischen Säuren, insbesondere Ascorbinsäure und Zitronensäure;
(d) 0 bis 10 Gew.-% Magnesiumhydroxid;
(e) 0 bis 10 Gew.-% Alkanolamin;
(f) 0 bis 5 Gew.-% eines weiteren zwei- oder höherwertigen Metallsulfates;
(g) 0 bis 5 Gew.-% Fliessmittel, insbesondere ein Polycarboxylatether;
(h) 0 bis 35 Gew.-% Siliciumdioxid;
(i) 0 bis 8 Gew.-% Glycerin;
(j) Als restliche Menge Wasser.

Ein bevorzugter erfindungsgemässer Erstarrungs- und Erhärtungsbeschleuniger enthält beispielsweise (in Gew.-%, jeweils bezogen auf das Gesamtgewicht des Beschleunigers):
(a) 35 - 60 Gew.-% Aluminiumsulfat (Al₂(SO₄)₃*14H₂O);
(b) 0.1 bis 20 Gew.-% Aluminiumhydroxid (Al(OH)₃);
(c) 0.001 bis 1 Gew.-% der wenigstens zwei organischen Säuren, insbesondere Ascorbinsäure und Zitronensäure;
(d) 0 - 10 Gew.-%, insbesondere 0.5 - 5 Gew.-% Magnesiumhydroxid;
(e) 0 - 10 Gew.-% Alkanolamin;
(f) 0 - 5 Gew.-% eines weiteren zwei- oder höherwertigen Metallsulfates;
(g) 0 - 35 Gew.-% Siliciumdioxid;
(h) 0 - 8 Gew.-% Glycerin;
(i) 0 - 5 Gew.-% Fliessmittel;
(j) Als restliche Menge Wasser.

Ein weiterer Aspekt der vorliegenden Erfindung betrifft ein Verfahren zur Herstellung eines erfindungsgemässen Abbinde- und Erhärtungsbeschleunigers. Dabei werden die vorstehend genannten Komponenten oder Substanzen insbesondere zu einer wässrigen Lösungen oder Suspension vermischt. Die Zugabe der einzelnen Substanzen kann prinzipiell in beliebiger Reihenfolge geschehen. Die erfindungsgemässen Beschleuniger sind entsprechend erhältlich durch derartige Verfahren.

Die erfindungsgemässen Beschleuniger können beispielsweise als Lösung, Dispersion oder pulverförmig vorliegen oder hergestellt werden, wobei es bevorzugt ist, dass ein als Pulver vorliegender Beschleuniger vor der Anwendung in Wasser gelöst oder dispergiert wird.

Wird bei der Herstellung des Beschleunigers eine Magnesiumhydroxid und/oder -oxid verwendet, steigt durch die starke Reaktion des Magnesiumhydroxids und/oder -oxids mit der organischen Säure die Temperatur einer wässrigen Lösung oder Dispersion stark an, so dass besonders gute Durchmischung erreicht wird. Dies vereinfacht den Herstellprozess und es wird weniger Energie benötigt.

Ein zusätzlicher Vorteil der Verwendung von Magnesium ist die durch die Magnesiumionen bewirkte weiter verbesserte Lagerstabilität der Beschleuniger. Bereits bei einem Gehalt von 0.5 Gew.-%, insbesondere 1 Gew.-%, an Magnesiumhydroxid bei der Herstellung wird eine noch bessere Lagerstabilität erzielt. Auch die Entwicklung der Druckfestigkeit des Spritzbetons in den ersten Stunden und Tagen wird positiv beeinflusst und ist besser als bei herkömmlich verwendeten Beschleunigern.

Weiterhin betrifft die vorliegende Erfindung ein Verfahren zur Beschleunigung des Erstarrens und Erhärtens von hydraulischen Bindemitteln sowie daraus hergestelltem Mörtel oder Beton, dadurch gekennzeichnet, dass dem Gemisch, welches hydraulische Bindemittel enthält, ein erfindungsgemässer Erstarrungs- und Erhärtungsbeschleuniger in einer Menge von 0.1 bis 15 Gew.-%, insbesondere von 1 bis 10 Gew.-%, besonders bevorzugt 4 - 8 Gew.-%, bezogen auf das Gewicht des hydraulischen Bindemittels, zugegeben wird.

Der erfindungsgemässe Beschleuniger kann zur Beschleunigung des Abbindens und Erhärtens von hydraulischen Bindemitteln, hydraulischen Bindemitteln in Abmischung mit latent hydraulischen Bindemitteln oder inerten Füllstoffen, Mörtel oder Beton verwendet werden. Eine bevorzugte Verwendung erfolgt im Spritzmörtel oder Spritzbeton nach dem Trocken- oder Nass-Spritzverfahren, wobei der Beschleuniger dem trockenen oder mit Wasser angemachten Bindemittel, Mörtel oder Beton in der Förderleitung, der Vorbenetzungsdüse oder der Spritzdüse, direkt in die Mischung oder ins Anmachwasser zugegeben resp. zudosiert wird. Vorzugsweise wird ein Beschleuniger in Form einer Lösung oder Dispersion mit einem Flüssigdosiergerät zudosiert, ein pulverförmiger Beschleuniger mit einem Pulverdosiergerät.

Beispiele für Bindemittel, deren Erhärten und Abbinden durch den erfindungsgemässen Beschleuniger respektive das Verfahren beschleunigt werden können, sind Zement wie Mischzemente, Kalk, hydraulischer Kalk und Gips, je alleine oder in Abmischung mit latent hydraulischen Bindemitteln oder inerten Füllstoffen, und Beispiele für Mischungen, welche diese Bindemittel enthalten, sind Mörtel und Beton, insbesondere Spritzmörtel und Spritzbeton.

Ein weiterer Gegenstand der vorliegenden Erfindung ist zudem ein härtbares respektive gehärtetes Bindemittel enthaltendes Gemisch, das den erfindungsgemässen Beschleuniger enthält, insbesondere Spritzmörtel und Spritzbeton enthaltend den erfindungsgemässen Beschleuniger.

Durch die Verwendung der erfindungsgemässen Erstarrungs- und Erhärtungsbeschleuniger wird ein äusserst rasches Abbinden der entsprechenden Bindemittel oder der Mischungen, die derartige Bindemittel enthalten, bewirkt, und es werden hohe Anfangs- und Endfestigkeiten erreicht.

Aus den nachfolgenden Ausführungsbeispielen ergeben sich dem Fachmann weitere Abwandlungen und Vorteile der Erfindung.

### Ausführungsbeispiele

### 1. Herstellung von Beschleunigern

Es wurde verschiedene Beschleuniger **A1** - **A2** (erfindungsgemäss) und **B1 - B11** (Vergleichsversuche) mit den in Tabelle 1 beschriebenen Zusammensetzungen hergestellt. Dabei wurde jeweils das Wasser bei Raumtemperatur (ca. 20°C) vorgelegt, darin das Magnesiumhydroxid aufgeschlämmt und die in Tabelle 1 genannte(n) Säure(n) (Mengenangabe jeweils bezogen auf reine Säure(n) bzw. Wirksubstanz) zugegeben, wodurch die Temperatur der Lösung zunahm. Danach wurden das Aluminiumsulfat (17% Al₂O₃) und das Aluminiumhydroxid (amorph) beigefügt und bei erhöhter Temperatur gelöst. Die Lösung wurde dann solange gerührt, bis die Temperatur nach ungefähr einer Stunde auf ca. 40°C abgesunken war. Die so Beschleuniger liegen als klare Lösungen mit teilweise fein dispergierten Partikeln vor.

**Tabelle 1: Beschleunigerzusammensetzungen (alle Angaben in Gew.-%)**

| **Nr.** | H₂O | Al(OH)₃ (amorph) | Al₂(SO₄)₃ · 14 H₂O | Mg(OH)₂ | Säure(n) / Anteil(e) |
|---|---|---|---|---|---|
| **A1** | 45.70 | 15.60 | 37.00 | 1.00 | Zitronensäure / 0.50 |
| | | | | | Ascorbinsäure / 0.20 |
| **A2** | 45.45 | 15.60 | 37.00 | 1.00 | Zitronensäure / 0.50 |
| | | | | | Ascorbinsäure / 0.20 |
| | | | | | Ameisensäure / 0.25 |
| **B1** | 45.90 | 15.60 | 37.00 | 1.00 | Zitronensäure / 0.50 |
| **B2** | 45.10 | 15.60 | 37.00 | 1.00 | Zitronensäure / 1.30 |
| **B3** | 44.75 | 15.60 | 37.00 | 1.00 | Zitronensäure / 0.50 |
| | | | | | Ascorbinsäure /1.15 |
| **B4** | 44.70 | 15.60 | 37.00 | 1.00 | Zitronensäure / 1.02 |
| | | | | | Ascorbinsäure / 0.68 |
| **B5** | 45.95 | 15.60 | 37.00 | 1.00 | Ascorbinsäure / 0.20 |
| | | | | | Ameisensäure / 0.25 |
| **B6** | 45.66 | 15.60 | 37.00 | 1.00 | Ascorbinsäure / 0.43 |
| | | | | | Ameisensäure / 0.31 |
| **B7** | 46.20 | 15.60 | 37.00 | 1.00 | Ascorbinsäure / 0.20 |
| **B8** | 45.65 | 15.60 | 37.00 | 1.00 | Zitronensäure / 0.50 |
| | | | | | Ameisensäure / 0.25 |
| **B9** | 45.51 | 15.60 | 37.00 | 1.00 | Zitronensäure / 0.61 |
| | | | | | Ameisensäure / 0.28 |
| **B10** | 46.40 | 15.60 | 37.00 | 1.00 | - |
| **B11** | 44.58 | 15.60 | 37.00 | 1.00 | Phosphorsäure / 1.82 |

### 2. Eigenschaften und Wirkung der Beschleuniger

Die Beschleuniger wurden hinsichtlich Ihrer Stabilität von Auge beurteilt. Die "Stabilität" steht dabei für die Zeit (gemessen in Tagen), während deren eine Beschleunigerlösung hinsichtlich Viskosität und Phasenstruktur bei optischer Betrachtung bei Raumtemperatur (ca. 20°C) in einem dicht verschlossenen Behälter im Wesentlichen unverändert bleibt. Dies bedeutet, dass sich in diesem Zeitraum kein nennenswerter Bodensatz bildet und das anfänglich vorhandene wasserähnliche Fliessverhalten erhalten bleibt. In Tabelle 2 sind die entsprechend ermittelten Stabilitäten der Beschleuniger aus Tabelle 1 aufgeführt. Werte von mehr als 145 Tagen werden als sehr gut betrachtet. Werte unter 145 Tagen oder weniger als 5 Monate können bereits massive Einschränkungen sich bringen, von der Produktion über die Lieferung an Verteilzentren, die Lieferung an Kunden und die Verarbeitung eines Beschleunigers die Zeit knapp werden kann.

Zur Bestimmung der Wirksamkeit der Beschleunigerzusammensetzungen (A1 - **A2** und **B1** - **B11)** wurde eine Spritzbeton-äquivalente Zementpaste verwendet. Die Zementpaste besteht aus 8'000 g Portlandzement (hydraulisches Bindemittel), 1'600 g Kalsteinmehl, 0.7 Gew.-% Sika^{®} ViscoCrete^{®} SC-500 (Verflüssiger; erhältlich bei Sika Deutschland GmbH; Prozentangabe bezogen auf den Gehalt des hydraulischen Bindemittels) und Wasser (w/z = 0.42).

Die Zementpasten wurden anschliessend mit einer miniaturisierten Spritzbetonapparatur unter Beimischung von jeweils 6 Gew.-% (bezogen auf den Gehalt des hydraulischen Bindemittels) an Beschleuniger im Düsenbereich auf eine Ultraschallmesszelle appliziert. Die Entwicklung des Erstarrungs- und Erhärtungsvorgangs der applizierten Zementpaste wurde sodann durch die Ultraschallmessmethode wie sie in Kapitel 3 der Veröffentlichung von L. Oblak et al. (L. Oblak, B. Lindlar und D. Lootens "Kontinuierliche Messung der Festigkeitsentwicklung von Spritzbeton", Spritzbeton-Tagung 2012 Alpbach) beschrieben ist, gemessen. Dabei wurde jeweils die zeitliche Entwicklung des Schermoduls G ermittelt. Während der Ultraschallmessungen wurde jeweils die Temperatur direkt an der applizierten Zementpaste sowie an der Ultraschall-Ausbreitungsstrecke gemessen und die Temperaturabhängigkeit der Ultraschall-Messergebnisse mitberücksichtigt. Wie in der oben genannten Publikation dargelegt, korreliert die Ultraschallmessmethode seht gut mit gängigen Messmethoden wie z.B. Proktormeter, Hilti-Setzbolzen und Druckfestigkeit. Die Resultate der Ultraschallmessungen sind entsprechend direkt mit Ergebnissen, welche nach diesen Verfahren bestimmt werden vergleichbar.

Tabelle 2 zeigt die Ergebnisse der Spritzversuche. Dabei sind jeweils die Schermodule G zu den Zeitpunkten 2 Minuten, 6 Minuten und 200 Minuten nach der Applikation angegeben. Dies sind insbesondere für Spritzbetonanwendungen besonders relevante Zeiten.

**Tabelle 2: Stabilitäten der Beschleuniger und Ergebnisse der Spritzversuche**

| Beschleuniger | Stabilität [Tage] | Schermodul G nach x Minuten [MPa] | | |
|---|---|---|---|---|
| | | x = 2 Min. | x = 6 Min. | x = 200 Min. |
| **A1** | 155 | 1.9 | 32 | 230 |
| **A2** | 159 | 0.9 | 20 | 178 |
| **B1** | 140 | 1.2 | 20 | 177 |
| **B2** | 55 | 0.5 | 18 | 245 |
| **B3** | 179 | 1.6 | 21 | 128 |
| **B4** | 180 | 0.6 | 14 | 124 |
| **B5** | 123 | - | - | - |
| **B6** | 119 | - | - | - |
| **B7** | 107 | - | - | - |
| **B8** | 80 | - | - | - |
| **B9** | 77 | - | - | - |
| **B10** | 54 | 3.4 | 33 | 887 |
| **B11** | 124 | 2.3 | 31 | 544 |

Aus Tabelle 2 ist ersichtlich, dass die erfindungsgemässen Beschleuniger **A1** und **A2** sehr gute Stabilitäten von 155 bzw. 159 Tagen aufweisen. Zugleich werden zu allen untersuchten Zeiten nach 2 Minuten, 6 Minuten und 200 Minuten hohe Werte beim Schermodul G respektive den damit korrelierenden Festigkeiten erreicht. Im Besonderen trifft dies auf den Beschleuniger **A1** zu, welcher im Vergleich zum Beschleuniger **A2** keine Ameisensäure enthält.

Zwar können mit Beschleunigern ohne Säure (**B10**) oder mit Beschleunigern enthaltend Phospohorsäure **(B11)** noch höhere Werte beim Schermodul G erreicht werden, diese Beschleuniger schneiden aber hinsichtlich Stabilität schlecht ab.

Mit den Beschleunigern **B3** und **B4**, welche über einen nicht erfindungsgemässen Anteil an Ascorbinsäure (**B3**; 1.15 Gew.-%) respektive Zitronensäure (**B4**; 1.02 Gew.-%) verfügen, werden sehr hohe Stabilitätswerte erreicht. Diese Beschleuniger sind aber beispielsweise im Vergleich mit Beschleuniger **A1** bezüglich Schermodul G bzw. Festigkeitsentwicklung klar unterlegen.

Ascorbinsäure alleine (**B7**) oder Zitronensäure alleine (**B2**; 0.5 Gew.-% und **B2**, 1.3 Gew.-%) alleine ergeben klar schlechtere bis ganz schlechte Stabilitätswerte. Der Beschleuniger mit 0.5 Gew.-% Zitronensäure alleine (**B1**) schneidet in Bezug auf die Entwicklung des Schermoduls zu allen Zeiten zudem deutlich schlechter ab als der vergleichbare Beschleuniger mit Zitronensäure und Ascorbinsäure (**A1**). Bei Verwendung von 1.3 Gew.-% Zitronensäure alleine (**B2**) wird zwar zu späteren Zeiten (200 Min.) ein höherer Schermodul G erreicht als mit Beschleuniger **A1**, bei früheren und für Spritzbetonanwendungen besonders relevanten Zeiten (2 Min. und 6 Min.) sind die korrespondierende Werte aber sehr viel tiefer.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Erstarrungs- und Erhärtungsbeschleuniger für hydraulische Bindemittel, insbesondere für Spritzbeton oder Spritzmörtel, umfassend Sulfat, welches aus Aluminiumsulfat, Aluminiumhydroxysulfat und/oder Schwefelsäure stammt, Aluminium, welches aus Aluminiumsulfat, Aluminiumhydroxysulfat, Aluminiumhydroxid, und/oder Aluminiumhydroxidcarbonat stammt, und wenigstens zwei chemisch unterschiedliche organische Säuren, welche jeweils zusätzlich zu mindestens einer Säuregruppe wenigstens eine Hydroxygruppe aufweisen und wobei ein Anteil der wenigstens zwei organischen Säuren zusammen höchstens 1 Gew.-%, bezogen auf das Gesamtgewicht des Beschleunigers, ausmacht.

2. Beschleuniger nach einem der vorhergehenden Ansprüche, **dadurch gekennzeichnet, dass** wenigstens eine der beiden organischen Säuren eine α-Hydroxycarbonsäure ist.

3. Beschleuniger nach Anspruch 2, **dadurch gekennzeichnet, dass** die α-Hydroxycarbonsäure einen Gewichtsanteil von 0.05 - 0.8 Gew.-%, insbesondere 0.3 - 0.7 Gew.-%, bezogen auf das Gesamtgewicht des Beschleunigers, aufweist.

4. Beschleuniger nach einem der vorhergehenden Ansprüche, **dadurch gekennzeichnet, dass** wenigstens eine der beiden organischen Säuren als Säuregruppe eine Enol-Gruppe, insbesondere eine Endiol-Gruppe, besonders bevorzugt eine Redukton-Gruppe, beinhaltet.

5. Beschleuniger nach Anspruch 4, **dadurch gekennzeichnet, dass** die organische Säure mit einer Enol-Gruppe, einer Endiol-Gruppe oder einer Redukton-Gruppe einen Gewichtsanteil von 0.05 - 0.8 Gew.-%, insbesondere 0.1 - 0.3 Gew.-%, bezogen auf das Gesamtgewicht des Beschleunigers, aufweist.

6. Beschleuniger nach einem der vorhergehenden Ansprüche, **dadurch gekennzeichnet, dass** eine erste der beiden organischen Säuren eine Hydroxycarbonsäure ist und dass eine zweite der beiden organischen Säuren als Säuregruppe eine Enol-Gruppe, ein Endiol-Gruppe oder eine Redukton-Gruppe beinhaltet.

7. Beschleuniger nach einem der vorhergehenden Ansprüche, **dadurch gekennzeichnet, dass** eine erste der beiden organischen Säuren Zitronensäure ist und eine zweite der beiden organischen Säuren Ascorbinsäure ist.

8. Beschleuniger nach einem der vorhergehenden Ansprüche, **dadurch gekennzeichnet, dass** ein Gewichtsverhältnis der wenigstens zwei unterschiedlichen organischen Säuren im Bereich von 5:1 - 1:5, insbesondere 3:1 - 1:1, liegt.

9. Beschleuniger nach Anspruch 1, **dadurch gekennzeichnet, dass** er 17 bis 35 Gew.-% Sulfat, 3.2 bis 9.5 Gew.-% Aluminium und 0.001 bis 1 Gew.-% der wenigstens zwei organischen Säuren umfasst, bezogen auf das Gesamtgewicht des Beschleunigers.

10. Beschleuniger nach einem der vorhergehenden Ansprüche, **dadurch gekennzeichnet, dass** 0.1 bis 10 Gew.-%, insbesondere 0.5 bis 5 Gew.-%, Magnesiumhydroxid, Magnesiumoxid, Magnesiumoxyhydroxid, Magnesiumcarbonat und/oder die entsprechende Menge einer anderen Magnesiumverbindung, bezogen auf das Gesamtgewicht des Beschleunigers, vorliegen.

11. Beschleuniger nach einem der vorhergehenden Ansprüche, **dadurch gekennzeichnet, dass** ein Anteil an weiteren Säuren, insbesondere Alkansäuren, kleiner als 0.1 Gew.-%, insbesondere kleiner als 0.01 Gew.-%, bezogen auf das Gesamtgewicht des Beschleunigers, ist.

12. Verfahren zur Beschleunigung des Erstarrens und Erhärtens von hydraulischen Bindemitteln sowie daraus hergestelltem Mörtel oder Beton, **dadurch gekennzeichnet, dass** einem Gemisch, welches hydraulische Bindemittel enthält, ein Erstarrungs- und Erhärtungsbeschleuniger nach den Ansprüchen 1 bis 11 in einer Menge von 0.1 bis 15 Gew.-% bezogen auf das Gewicht des hydraulischen Bindemittels zugegeben wird.

13. Verwendung eines Erstarrungs- und Erhärtungsbeschleunigers nach wenigstens einem der Ansprüche 1 bis 11 als Beschleuniger in einem hydraulischen Bindemittel, insbesondere in Spritzbeton oder Spritzmörtel.

14. Bindemittel enthaltendes Gemisch, **dadurch gekennzeichnet, dass** es den Beschleuniger nach wenigstens einem der Ansprüche 1 bis 11 enthält.

15. Ausaehärteter Formkörper, erhältlich durch Aushärten eines mit Wasser angemachten Bindemittel enthaltendes Gemisches nach Anspruch 14.

## Claims

1. Solidification and hardening accelerator for hydraulic binders, more particularly for sprayed concrete or sprayed mortar, comprising sulfate which originates from aluminium sulfate, aluminium hydroxysulfate and/or sulfuric acid, aluminium which originates from aluminium sulfate, aluminium hydroxysulfate, aluminium hydroxide, and/or aluminium hydroxide carbonate, and at least two chemically different organic acids, each having at least one hydroxyl group as well as at least one acid group, the combined maximum fraction of the at least two organic acids being 1 wt%, based on the total weight of the accelerator.

2. Accelerator according to one of the preceding claims, **characterized in that** at least one of the two organic acids is an α-hydroxycarboxylic acid.

3. Accelerator according to Claim 2, **characterized in that** the α-hydroxycarboxylic acid has a weight fraction of 0.05-0.8 wt%, more particularly 0.3-0.7 wt%, based on the total weight of the accelerator.

4. Accelerator according to any of the preceding claims, **characterized in that** at least one of the two organic acids contains as acid group an enol group, more particularly an enediol group, very preferably a reductone group.

5. Accelerator according to Claim 4, **characterized in that** the organic acid having an enol group, an enediol group or a reductone group has a weight fraction of 0.05-0.8 wt%, more particularly 0.1-0.3 wt%, based on the total weight of the accelerator.

6. Accelerator according to any of the preceding claims, **characterized in that** a first of the two organic acids is a hydroxycarboxylic acid and **in that** a second of the two organic acids contains as acid group an enol group, an enediol group or a reductone group.

7. Accelerator according to any of the preceding claims, **characterized in that** a first of the two organic acids is citric acid and a second of the two organic acids is ascorbic acid.

8. Accelerator according to any of the preceding claims, **characterized in that** a weight ratio of the at least two different organic acids is in the range of 5:1-1:5, more particularly 3:1-1:1.

9. Accelerator according to Claim 1, **characterized in that** it comprises 17 to 35 wt% of sulfate, 3.2 to 9.5 wt% of aluminium, and 0.001 to 1 wt% of the at least two organic acids, based on the total weight of the accelerator.

10. Accelerator according to any of the preceding claims, **characterized in that** 0.1 to 10 wt%, more particularly 0.5 to 5 wt%, of magnesium hydroxide, magnesium oxide, magnesium oxyhydroxide, magnesium carbonate and/or the corresponding amount of another magnesium compound, based on the total weight of the accelerator, are present.

11. Accelerator according to any of the preceding claims, **characterized in that** a fraction of further acids, more particularly alkanoic acids, is less than 0.1 wt%, more particularly less than 0.01 wt%, based on the total weight of the accelerator.

12. Method for accelerating the solidification and hardening of hydraulic binders and also of concrete or mortar produced therefrom, **characterized in that** a mixture which comprises hydraulic binders is admixed with a solidification and hardening accelerator according to Claims 1 to 11 in an amount of 0.1 to 15 wt%, based on the weight of the hydraulic binder.

13. Use of a solidification and hardening accelerator according to at least one of Claims 1 to 11 as accelerator in a hydraulic binder, more particularly in sprayed concrete or sprayed mortar.

14. Binder-comprising mixture **characterized in that** it comprises the accelerator according to at least one of Claims 1 to 11.

15. Cured shaped article obtainable by curing a binder-comprising mixture according to Claim 14, mixed with water.

## Revendications

1. Accélérateur de prise et de durcissement pour liants hydrauliques, en particulier pour le béton projeté ou le mortier projeté, comprenant du sulfate, qui provient de sulfate d'aluminium, d'hydroxysulfate d'aluminium et/ou d'acide sulfurique, de l'aluminium, qui provient de sulfate d'aluminium, d'hydroxysulfate d'aluminium, d'hydroxyde aluminium et/ou d'hydroxyde-carbonate d'aluminium, et au moins deux acides organiques chimiquement différents, qui présentent à chaque fois, en plus d'au moins un groupe acide, au moins un groupe hydroxy et une proportion des au moins deux acides organiques ensemble représentant au plus 1% en poids, par rapport au poids total de l'accélérateur.

2. Accélérateur selon l'une des revendications précédentes, **caractérisé en ce qu'**au moins l'un des deux acides organiques est un acide α-hydroxycarboxylique.

3. Accélérateur selon la revendication 2, **caractérisé en ce que** l'acide α-hydroxycarboxylique présente une proportion pondérale de 0,05-0,8% en poids, en particulier de 0,3-0,7% en poids, par rapport au poids total de l'accélérateur.

4. Accélérateur selon l'une des revendications précédentes, **caractérisé en ce qu'**au moins l'un des deux acides organiques comporte, comme groupe acide, un groupe énol, en particulier un groupe ènediol, de manière particulièrement préférée un groupe réductone.

5. Accélérateur selon la revendication 4, **caractérisé en ce que** l'acide organique présentant un groupe énol, un groupe ènediol ou un groupe réductone présente une proportion pondérale de 0,05-0,8% en poids, en particulier de 0,1-0,3% en poids, par rapport au poids total de l'accélérateur.

6. Accélérateur selon l'une des revendications précédentes, **caractérisé en ce qu'**un premier des deux acides organiques est un acide hydroxycarboxylique et **en ce qu'**un deuxième des deux acides organiques comporte, comme groupe acide, un groupe énol, un groupe ènediol ou un groupe réductone.

7. Accélérateur selon l'une des revendications précédentes, **caractérisé en ce qu'**un premier des deux acides organiques est l'acide citrique et un deuxième des deux acides organiques est l'acide ascorbique.

8. Accélérateur selon l'une des revendications précédentes, **caractérisé en ce qu'**un rapport pondéral des au moins deux acides organiques différents se situe dans la plage de 5:1-1:5, en particulier 3:1-1:1.

9. Accélérateur selon la revendication 1, **caractérisé en ce qu'**il comprend 17 à 35% en poids de sulfate, 3,2 à 9,5% en poids d'aluminium et 0,001 à 1% en poids des au moins deux acides organiques, par rapport au poids total de l'accélérateur.

10. Accélérateur selon l'une des revendications précédentes, **caractérisé en ce que** 0,1 à 10% en poids, en particulier 0,5 à 5% en poids, d'hydroxyde de magnésium, d'oxyde de magnésium, d'oxyhydroxyde de magnésium, de carbonate de magnésium et/ou la quantité correspondante d'un autre composé de magnésium, par rapport au poids total de l'accélérateur, sont présents.

11. Accélérateur selon l'une des revendications précédentes, **caractérisé en ce qu'**une proportion d'autres acides, en particulier d'acides alcanoïques, est inférieure à 0,1% en poids, en particulier inférieure à 0,01% en poids, par rapport au poids total de l'accélérateur.

12. Procédé pour l'accélération de la prise et du durcissement de liants hydrauliques ainsi que de mortier ou de béton préparé à partir de ceux-ci, **caractérisé en ce qu'**un mélange, qui contient des liants hydrauliques est additionné d'un accélérateur de prise et de durcissement selon les revendications 1 à 11 en une quantité de 0,1 à 15% en poids, par rapport au poids du liant hydraulique.

13. Utilisation d'un accélérateur de prise et de durcissement selon au moins l'une des revendications 1 à 11 comme accélérateur dans un liant hydraulique, en particulier dans du béton projeté ou du mortier projeté.

14. Mélange contenant un liant, **caractérisé en ce qu'**il contient l'accélérateur selon au moins l'une des revendications 1 à 11.

15. Corps façonné durci, pouvant être obtenu par durcissement d'un mélange contenant un liant selon la revendication 14, gâché avec de l'eau.
